# EUROPÄISCHE PATENTSCHRIFT

(11) **EP 0 965 399 B1**
(45) Veröffentlichungstag und Bekanntmachung des Hinweises auf die Patenterteilung: **08.10.2003**
(21) Anmeldenummer: 98112137.9
(22) Anmeldetag: 01.07.1998
(51) Int. Cl.: B21F 3/02, B21F 35/00, F16F 1/04

(54) **Verfahren zur Herstellung eines elastischen Drahtformteils aus hartem Metalldraht mit abgerundetem Querschnitt**
Process for the manufacture of a wire spring from a hard metal wire having a rounded section
Procédé de fabrication d'un ressort en fil à partir d'un fil métallique dur ayant une section rondée

(30) Priorität: 18.06.1998 EP 98111191
(43) Veröffentlichungstag der Anmeldung: 22.12.1999
(73) Patentinhaber: Société Alsacienne pour la Transformation de l'Acier S.a.r.l., 67590 Schweighouse sur Moder (FR)
(72) Erfinder: Schroer, Bernt, Dr., 33442 Herzebrock-Clarholz (DE)
(74) Vertreter: Patentanwälte Rehberg + Hüppe

(56) Entgegenhaltungen:
- EP-A- 0 596 810
- DE-C- 4 306 895
- GB-A- 258 483
- GB-A- 2 275 983
- PATENT ABSTRACTS OF JAPAN vol. 013, no. 549 (C-662), 7. Dezember 1989 (1989-12-07) & JP 01 225721 A (PRECISION SPRING KK), 8. September 1989 (1989-09-08)
- PATENT ABSTRACTS OF JAPAN vol. 008, no. 216 (M-329), 3. Oktober 1984 (1984-10-03) & JP 59 101231 A (DAIDO TOKUSHUKO KK), 11. Juni 1984 (1984-06-11)

## Beschreibung

Die Erfindung bezieht sich auf ein Verfahren zur Herstellung eines elastischen Drahtformteils aus hartem Metalldraht mit abgerundetem Querschnitt, mit den Merkmalen des Oberbegriffs des Patentanspruchs 1.

Beispielsweise aus der EP 0 596 810 B1 ist es bekannt, daß der Metalldraht bei einer Druckfeder über seinen Querschnitt keine gleichmäßige Belastung erfährt. Der Metalldraht wird in seinem an den Innenradius der Druckfeder angrenzenden Bereich stärker belastet als in seinem an den Außendurchmesser der Druckfeder angrenzenden Bereich. Um die hieraus resultierenden Probleme, wie eine Begrenzung der Lebensdauer der Druckfeder durch Überbelastungen zu reduzieren, ist es aus der EP 0 596 810 B1 bekannt, den Querschnitt des Metalldrahts ausgehend von einer runden Grundform umzugestalten. Bei kalt gewickelten Federn soll die Umformung des Drahts von kreisrunder Querschnittsgestalt durch einen letzten Ziehdurchgang oder ein Kaltwalzen erfolgen. Dabei ist ausgeführt, daß die Umformungen bei zweckdienlicher Ausführung der Güte des Drahts und auch seinem Oberflächenzustand nicht chaden, sondern sogar zu deren Verbesserung dienen. Allerdings ist die grundlegende Umformung des Querschnitts, wie sie in der EP 0 596 810 B1 vorgeschlagen ist, vergleichsweise aufwendig. Der hier zu betreibende Aufwand wird durch die Verbesserungen der erhaltenden Federn nicht gerechtfertigt.

Auch aus der EP 0 313 324 A1 ist es bekannt, den Querschnitt des Metalldrahts einer spiralförmigen Feder unrund zu gestalten, um den über dem Querschnitt des Metalldrahts ungleichmäßig verteilten Belastungen Rechnung zu tragen. Konkret wird ein eiförmiger Querschnitt für den Metalldraht vorgeschlagen, wobei sich der Bereich des größeren Krümmungsradius bei einer Druckfeder angrenzend an den Innenradius der Feder und bei einer Zugfeder angrenzend an den Außenradius der Feder befinden soll.

Aus der DE 43 06 895 C1 ist es bekannt, vor dem Biegen bzw. Wickeln einer spiralförmigen Feder den ursprünglich vollrunden Querschnitt des Metalldrahts der Feder mit Abflachungen zu versehen, über die benachbarte Federwindungen der fertigen Feder aneinander zur Anlage kommen können. Hierdurch wird das Blockmaß der spiralförmigen Feder reduziert. Weiterhin werden flächige Anlagebereiche benachbarter Federwindungen geschaffen, über die auftretende Stoßkräfte besser abgetragen werden, als im Fall einer linienförmigen Anlage. Bei dem aus der DE 43 06 895 C1 bekannten Verfahren kann ein bereits gehärteter und hinsichtlich seiner Oberflächengüte geprüfter Federdraht vor dem Biegen bzw. Wickeln der Federn durch Prägewalzen abgeflacht werden. Die Abflachungen befinden sich jedoch nach dem bekannten Verfahren nicht in einem Bereich, der durch die elastische Verformung der Feder einer besonderen Beanspruchung unterliegt.

Zur Oberflächenvergütung des Metalldrahts von elastischen Drahtformteilen ist es bekannt, die Oberfläche des Metalldrahts nach dem Biegen, Winden oder Wickeln zu dem jeweiligen Drahtformteil zu strahlen, d. h. mit schnellen Partikeln zu beaufschlagen, die zu einer Einbringung von Eigenspannungen in die oberflächlichen Bereiche des Metalldrahts führen. Dabei ist es jedoch nicht möglich, die Eigenspannungen lokal konzentriert aufzubringen, zudem ist der Tiefenbereich der Eigenspannungen ebenso wie die absolute Größe der Eigenspannungen begrenzt. Weiterhin ist der an den Innenradius einer spiralförmigen Feder angrenzende Bereich des Metalldrahts, insbesondere bei einer Zugfeder, beim Strahlen nicht oder nur schlecht erreichbar.

Üblich ist bei der Herstellung von elastischen Drahtformteilen die Auslagerung, d. h. zeitweise Erwärmung des Drahtformteils nach dem Biegen, Winden oder Wickeln auf höhere Temperaturen, um exzessive Spannungen, die durch das Biegen, Winden oder Wickeln in den Metalldraht eingeführt wurden, wieder abzubauen.

Ein Verfahren nach dem Oberbegriff des Patentanspruchs 1 ist aus der JP-A-01 225721 bekannt. Hier wird der Metalldraht vor dem Wickeln einer Spiralfeder in dem Bereich, der bei der Spiralfeder einer besonderen Beanspruchung unterliegt, mit den Drahtspitzen einer rotierenden Drahtbürste, die in Gegenrichtung zu der Förderrichtung des Metalldraht umlaufen, angeprägt, um die lokalen Eigenspannungen in den besonders beanspruchten Bereich des Metalldrahts einzuführen. Der Metalldraht wird mit einer Abstützwalze elastisch an die Drahtbürste angedrückt.

Der Erfindung liegt die Aufgabe zugrunde, ein Verfahren der eingangs beschriebenen Art aufzuzeigen, mit dem ohne einen insgesamt größeren Verfahrensaufwand, der in keiner vernünftigen Relation zu den erreichbaren Verbesserungen steht, plastische Verformungen, wie das zyklische Kriechen des Metalldrahts der elastischen Drahtformteile unter Belastung bei gleichzeitiger Verlängerung der Lebensdauer des elastischen Drahtformteils reduziert werden.

Erfindungsgemäß wird diese Aufgabe durch ein Verfahren mit den Merkmalen des Patentanspruchs 1 gelöst.

Bevorzugte Ausführungsformen des neuen Verfahrens sind in den Unteransprüchen 2 bis 9 beschrieben.

Bei dem neuen Verfahren wird die Kaltverformung nicht genutzt, um den gesamten Querschnitt des Metalldrahts umzuformen. Vielmehr werden Anprägungen mit dem vornehmlichen Ziel angebracht, in den angeprägten Bereichen Eigenspannungen in den Metalldraht einzuführen. Diese Eigenspannungen wirken zusammen mit den Spannungen die durch das Biegen, Winden oder Wickeln des Metalldrahts zu dem Drahtformteil hervorgerufen werden. Es können dabei aber durchaus auch solche Überlagerungen auftreten, die nicht mehr zu einer Addition der jeweiligen Eigenspannungen, sondern sogar zu einem relativen Abbau führen. Dieser Effekt macht es zum Teil überhaupt erst möglich, daß nach dem Biegen, Winden oder Wickeln des Drahtformteils darauf verzichtet werden kann, das Drahtformteil einer Temperatur von mehr als 250 °C auszusetzen. Dieser Verzicht auf eine anschließende Wärmebehandlung ist aber gleichzeitig Voraussetzung dafür, daß die durch das Anprägen in den Metalldraht eingebrachten Eigenspannung nicht wieder abgebaut werden. An dem fertigen Drahtformteil machen sich die vor dem Biegen, Winden oder Wickeln eingebrachten Eigenspannungen in der Weise bemerkbar, daß beispielsweise nur ein sehr geringes zyklisches Kriechen unter Belastung beobachtet wird. Gleichzeitig steigt die Lebensdauer tendenziell an. Auf der Kostenseite macht sich positiv bemerkbar, daß bei dem neuen Verfahren das Strahlen des Metalldrahts bei dem fertigen Drahtformteil entfallen kann. Sinnvoll kann jedoch ein zusätzliches Strahlen mit relativ feinem Korn sein, das zum Aufbau von oberflächennahen Eigenspannungen führt, während das erfindungsgemäße Anprägen in den darunterliegenden Bereichen des Metalldrahts wirkt. Beim Strahlen mit grobem Korn können hingegen die durch das Anprägen eingebrachten Eigenspannungen und deren positive Auswirkungen auf das Drahtformteil sogar wieder zunichte gemacht werden. Bei der Kaltverformung wird der abgerundete Querschnitt des Metalldrahts abgeflacht, um die Eigenspannungen einzuführen. Es ist jedoch nicht zwingend, daß z. B. eine Prägewalze zum Anprägen des Metalldrahts eine zylindrische Oberfläche aufweist.

Vorzugsweise wird der abgerundete Querschnitt des harten Metalldrahts so angeprägt, daß die Anprägung senkrecht zu einer Ebene verläuft, in der der Querschnitt des Metalldrahts bei dem elastisch verformten Drahtformteil einer besonderen Beanspruchung unterliegt. Die meisten elastischen Drahtformteile sind für eine Belastung in bestimmter Richtung ausgelegt. Hieraus resultiert nicht nur ein bestimmter Bereich, sondern auch eine bestimmte Ebene, in der der Querschnitt des Metalldrahts bei dem elastisch verformten Drahtformteil einer besonderen Beanspruchung unterliegt. Senkrecht zu dieser Ebene wird die erfindungsgemäße Anprägung mit höchstem Wirkungsgrad angebracht.

Konkret bedeutet dies beispielsweise, daß der abgerundete Querschnitt des harten Metalldrahts so angeprägt wird, daß die Anprägung am Innenradius einer spiralförmigen Druck- oder Zugfeder angeordnet ist und senkrecht zu dem jeweiligen Radius verläuft.

Bei einer spiralförmigen Torsionsfeder wird der abgerundete Querschnitt des harten Metalldrahts typischerweise so angeprägt, daß die Anprägung am Außenradius der Torsionsfeder angeordnet ist. Diese Anordnung bezieht sich auf eine typische Torsionsfeder zum Masseausgleich, deren Außenradius durch die elastische Verformung der Torsionsfeder verringert wird. Derartige Torsionsfedern werden beispielsweise zum Masseausgleich bei Sektionaltoren verwendet.

Zusätzlich zu den erfindungsgemäßen Anprägungen kann der Metalldraht beim Kaltverformen vor dem Biegen, Winden oder Wickeln mit Abflachungen versehen werden, über die benachbarte Windungen einer spiralförmigen Feder als elastisches Drahtformteil aneinander anliegen. Hierdurch kann die Baulänge beispielsweise von spriralförmigen Torsionsfedern nicht unerheblich verringert werden, da diese typischerweise eine große Anzahl von Federwindungen aufweisen.

Beim Winden von spiralförmigen Torsionsfedern können die Federenden mit kleinerem Innendurchmesser gewunden werden als der dazwischen liegende Hauptbereich der Torsionsfeder. Dies ermöglicht es, bei spiralförmigen Torsionsfedern für unterschiedliche Beanspruchungen die Federenden jeweils mit gleichem Innendurchmesser zu winden, so daß gleiche Befestigungselemente zur Anwendung kommen können und beispielsweise auch eine einheitliche Länge der Torsionsfedern realisierbar ist. Die Abstimmung der Torsionsfedern auf die jeweilige Beanspruchung erfolgt über den zwischen den Federenden liegenden Hauptbereich der Torsionsfedern.

Um bei Torsionsfedern mit eingezogenen Federenden den Federdraht auch im Hauptbereich zwischen den Federenden radial abzustützen, kann beim Winden der spiralförmigen Torsionsfedern ein Stützkörper in den zwischen den Federenden liegenden Hauptbereich eingebracht werden.

Der bei der Erfindung zur Verwendung kommende harte Metalldraht ist typischerweise ein sogenannter patentiert gezogener, d.h. ein hartgezogener Metalldraht sein. Der Querschnitt des Metalldrahts vor dem Anbringen der Anprägungen ist vorzugsweise rund. Geeignet sind nicht beliebige harte Metalldrähte. Vielmehr müssen die Metalldrähte noch ausreichend duktil sein, damit sowohl das Anprägen als auch das anschließende Biegen, Wickeln oder Winden ohne Rißbildung erfolgen kann. Gut geeignet sind Metalldrähte mit mindestens 40 %iger, vorzugsweise mindestens 50 %iger Duktilität.

Die Erfindung wird im folgenden anhand von Ausführungsbeispielen näher erläutert und beschrieben. Dabei zeigt
- Figur 1: eine nach dem neuen Verfahren hergestellte Druckfeder,
- Figur 2: eine Walzenanordnung zur Durchführung des neuen Verfahren,
- Figur 3: eine nach dem neuen Verfahren hergestellte Zugfeder,
- Figur 4: eine nach dem neuen Verfahren hergestellte Torsionsfeder,
- Figur 5: Relaxationsmessungen an einer Torsionsfeder gemäß Figur 4 mit Vergleichswerten und
- Figur 6: eine Torsionsfeder in einer gegenüber Figur 4 abgewandelten Ausführungsform.

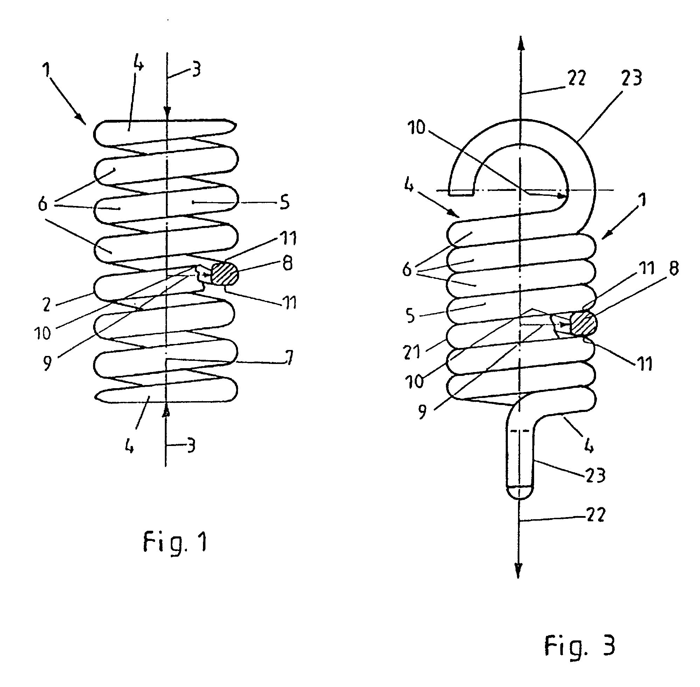

Die in Figur 1 dargestellte spiralförmige Feder 1 ist als Druckfeder 2 ausgebildet, was durch zwei aufeinander zu verlaufende Kraftpfeile 3 angedeutet ist, die auf die Federenden 4 gerichtet sind. Die Druckfeder 2 ist aus einem Federdraht 5 ausgebildet, der in mehreren Windungen 6 um die Federachse 7 verläuft. Bei der Ausbildung der Druckfeder 2 aus dem Metalldraht 5 wurde zwar von einem runden Querschnitt ausgegangen, der Querschnitt 8 des Metalldrahts 5 an der Druckfeder 2 ist jedoch unrund. Der Querschnitt 8 weist zum Innenradius 9 der Druckfeder 2 hin eine Anprägung 10 auf. Durch die Anprägung 10 sind Eigenspannungen in den Bereich des Metalldrahts 5 eingebracht, der bei der elastischen Verformung der Druckfeder 2 einer besonderen Beanspruchung unterliegt. Weiterhin weist der Querschnitt 8 Abflachungen 11 auf, über die benachbarte Windungen 6 der Druckfeder 2 beim Zusammendrücken der Druckfeder 2 auf ihr Blockmaß aneinander anliegen. Hierdurch wird das Blockmaß verringert und es werden statt linienförmiger Anlagebereiche flächenförmige Anlagebereiche zwischen den einzelnen Windungen 6 bereitgestellt.

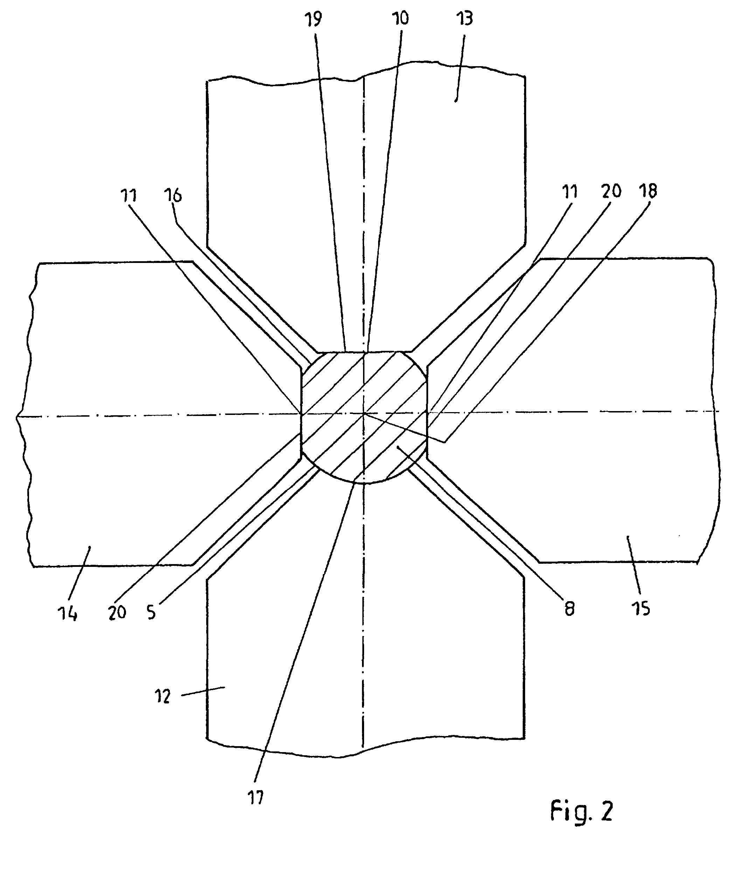

Zum Anbringen der Anprägung 10 und der Abflachungen 11 bei dem im Querschnitt zunächst runden Metalldraht 5 bei der Herstellung der Druckfeder gemäß Figur 1 ist eine in Figur 2 skizzierte Walzenanordnung vorgesehen. Die Walzenanordnung weist vier Walzen 12 bis 15 auf. Die Walze 12 dient ausschließlich zum Führen des Metalldrahts 5, bei dem es sich um einen patentiert gezogenen Metalldraht handelt, und weist eine an den runden Umfang 16 des Metalldrahts 5 angepaßte Anlagefläche 17 auf. Die der Walze 12 bezüglich der Drahtachse 18 gegenüberliegende Walze 13 weist einen zylinderförmige Prägefläche 19 zum Anbringen der Anprägung 10 auf. Die überkreuz dazu angeordneten Walzen 14 und 15 bringen mit ebenfalls zylinderförmigen Formflächen 20 die Abflachungen 11 an den Metalldraht 5 an. Nach der Verformung des Metalldrahts 5 gemäß Figur 2 wird die Druckfeder 2 gemäß Figur 1 aus dem Metalldraht 5 gewunden oder gewickelt. Dabei wird darauf geachtet, daß der Querschnitt 8 des Metalldrahts 5 die in Figur 1 dargestellte Ausrichtung erhält. Die durch das Anbringen der Anprägung 10 bewirkten Eigenspannungen in dem Metalldraht 5 werden konserviert, indem ein anschließendes Erwärmen des Metalldrahts 5 auf eine Temperatur von oberhalb 250 °C verhindert wird. Gegebenenfalls ist es auch sinnvoll, die Walzen 12 bis 15 zu kühlen, um bereits hier eine unerwünschte Erwärmung des Metalldrahts 5 zu verhindern. Ebenso kann eine direkte oder indirekte Kühlung des Metalldrahts beim Winden bzw. Wickeln erfolgen. Durch die Anprägung 10 und die damit in den Metalldraht 5 eingebrachten Eigenspannungen zeigt die Druckfeder 1 gemäß Figur 1 ein besonders geringes zyklisches Kriechen, d. h. eine besonders geringe plastische Verformung unter Belastung. Gleichzeitig zeichnet sie sich durch eine besonders große Lebensdauer aus. Durch die an den runden Umfang 16 des Metalldrahts 5 vor der Anbringung der Anprägung 10 und der Abflachungen 11 angepaßte Anlagefläche 17 der Walze 11 ist die Walzenanordnung gemäß Figur 2 nur für Ausgangsmaterial mit einem bestimmten Durchmesser optimal geeignet. Um Rüstzeiten einzusparen, kann es daher sinnvoll sein auch die Walze 12 mit einer zylindrischen Oberfläche zu versehen. Hieraus resultiert dann eine der Anprägung 10 gegenüberliegende zusätzliche Abflachung des Metalldrahts 5, die sich in der Regel nicht nachteilig auf die Eigenschaften der fertigen Feder auswirkt.

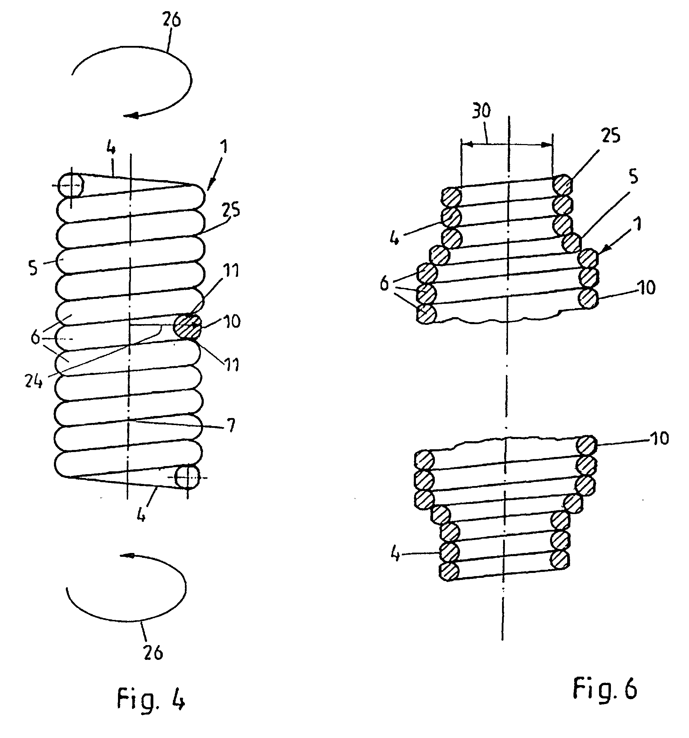

Die in Figur 3 dargestellte spiralförmige Feder 1 ist eine Zugfeder 21, was durch auseinander gerichtete Kraftpfeile 22 angedeutet ist, die an Federösen 23 an den Federenden 4 angreifen. Auch bei der Zugfeder 21 befindet sich die Anprägung 10 des Querschnitts 8 des die Zugfeder 21 ausbildenden Federdrahts 5 im Bereich des Innenradius 9. Auch bei einer Zugfeder tritt hier die maximale Beanspruchung des Federdrahts bei elastischer Verformung der Zugfeder 21 auf. Bei der Zugfeder 21 wirkt sich die Anprägung 10 zusätzlich positiv auf die Bruchsicherheit der Zugfeder im Bereich der auf Biegung beanspruchten Ösenwurzeln aus. Zusätzlich zu der Anprägung 10 sind wiederum die Abflachungen 11 vorhanden.

Bei der in Figur 4 dargestellten Feder 1 handelt es sich um eine Torsionsfeder 25, die in Richtung von Drehmomentpfeilen 26 zur Aufnahme von Drehmomenten zwischen Ihren Federenden 4 vorgesehen ist. Die Drehmomente beruhen typischerweise auf der Gewichtskraft einer Masse, die mit der Torsionsfeder 25 ausgeglichen werden sollen. Die Form des Querschnitts 8 des Metalldrahts 5 bzw. dessen Ausrichtung weicht bei der Torsionsfeder 25 gemäß Figur 4 von der Druckfeder 2 gemäß Figur 1 und der Zugfeder 21 gemäß Figur 3 ab, d.h., der Querschnitt 8 weist im Bereich des Außenradius 24 der Torsionsfeder 25 die Anprägung 10 auf. Dies entspricht der maximalen Beanspruchung des Metalldrahts 5 der Torsionsfeder 25 im Bereich des Außendurchmessers 24, wenn die Torsionsfeder 25 durch die einwirkenden Drehmomente gemäß den Pfeilen 26 in Richtung einer Vergrößerung ihrer Windungszahl beaufschlagt wird. Dies ist der Regelfall.

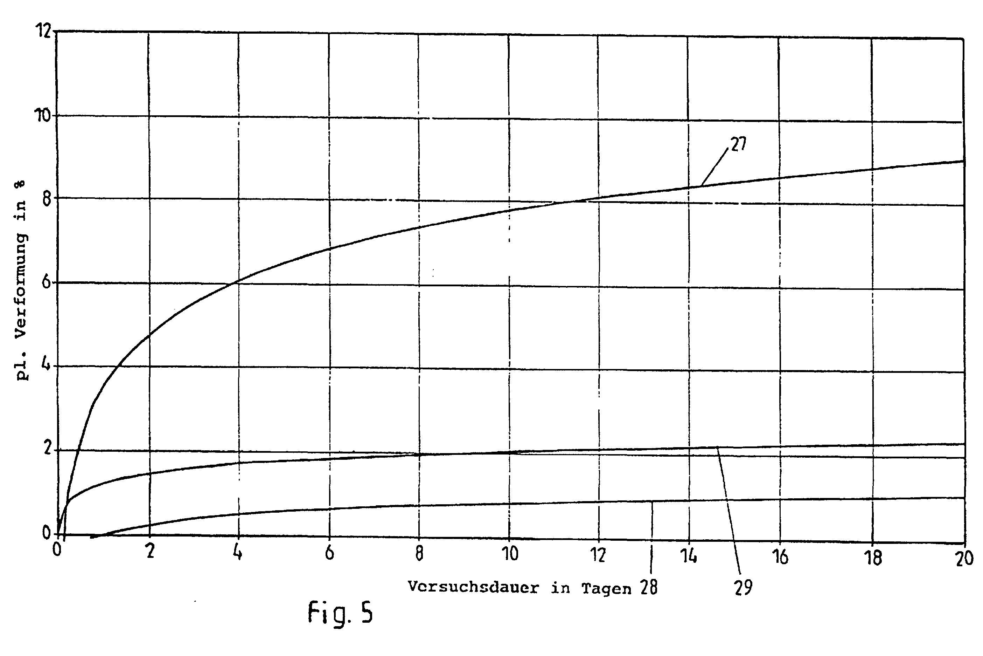

Figur 5 gibt das Ergebnis von Versuchen zur plastischen Verformung von verschiedenen Torsionsfedern bei einem 110 %igen Belastungsgrad wieder. Dabei zeigt die Kurve 27 die relative plastische Verformung einer herkömmlichen Torsionsfeder über der Zeit. Die Kurve 28 zeigt die relative plastische Verformung einer Torsionsfeder mit der erfindungsgemäßen Anprägung 10 gemäß Figur 4. Die Kurve 29 zeigt die relative plastische Verformung bei einer Torsionsfeder die zwar erfindungsgemäß unter Anbringung der Anprägung 10 gemäß Figur 4 hergestellt, aber anschließend zusätzlich mit grobem Korn gestrahlt wurde. Dabei ist zu erkennen, daß durch dieses Strahlen des Metalldrahts 5 die Eigenspannungen durch das Anprägen bereits wieder reduziert wurden und insofern die plastische Verformung deutlich größer ist als ohne das zusätzliche Strahlen. Die plastische Verformung bei der herkömmlichen Torsionsfeder gemäß Kurve 27 ist tatsächlich um ein vielfaches größer als bei der Kurve 28 zu der erfindungsgemäß hergestellten Torsionsfeder. Gleichzeitig weist die erfindungsgemäß hergestellte Torsionsfeder eine im Vergleich zu der herkömmlichen Torsionsfeder sehr gute Lebensdauer auf. Die der Kurve 28 zugrundeliegende Torsionsfeder ist konkret auf der Basis eines runden Federdrahts mit einem Durchmesser von 7 mm hergestellt worden. Dabei betrug die relative Größe der Anprägung 3,5 % und die relative Größe beider Abflachungen 11 zusammen betrug 11,5 %, jeweils bezogen auf den Drahtdurchmesser. Denkbar sind Anprägungen in einer Größe von bis zu 10 %. Typischerweise werden sie sich aber in einem Bereich von 1 bis 5 % des Drahtdurchmessers bewegen.

Figur 6 zeigt eine Torsionsfeder 25, die im Bereich der Federenden 4 einen kleineren Innendurchmesser 30 aufweist als in dem Hauptbereich zwischen den Federenden 4. Damit wird das Konzept verwirklicht, den Innendurchmesser 30 im Bereich der Federenden 4 bei Torsionsfedern 25, die für verschiedene Belastungen ausgelegt sind, jeweils gleich auszubilden, während die Abstimmung der Torsionsfeder 25 an die jeweilige Belastung neben der Stärke des Metalldrahts 5 jeweils über den Hauptbereich zwischen den Federenden 4 erfolgt. Dabei kann der Hauptbereich zwischen den Federenden neben einer Federwelle, die typischerweise in eine Torsionsfeder 25 eingeführt wird, durch einen zusätzlichen Stützkörper abgestützt werden. Der Stützkörper ist hier nicht dargestellt. Er kann aber beispielsweise beim Winden der Feder in den Hauptbereich zwischen den Federenden eingeschoben werden. Durch die Abflachungen 11 werden bei den neuen Torsionsfedern 25 zusätzlich besonders kurze Baulängen realisiert.

### BEZUGSZEICHENLISTE

- 1 -: Feder
- 2 -: Druckfeder
- 3 -: Kraftpfeil
- 4 -: Federende
- 5 -: Metalldraht
- 6 -: Windung
- 7 -: Federachse
- 8 -: Querschnitt
- 9 -: Innenradius
- 10 -: Anprägung

- 11 -: Abflachung
- 12 -: Walze
- 13 -: Walze
- 14 -: Walze
- 15 -: Walze
- 16 -: Umfang
- 17 -: Anlagefläche
- 18 -: Drahtachse
- 19 -: Prägefläche
- 20 -: Formfläche

- 21 -: Zugfeder
- 22 -: Kraftpfeil
- 23 -: Federöse
- 24 -: Außenradius
- 25 -: Torsionsfeder
- 26 -: Drehmomentpfeil
- 27 -: Kurve
- 28 -: Kurve
- 29 -: Kurve
- 30 -: Innendurchmesser

## Patentansprüche

1. Verfahren zur Herstellung eines elastischen Drahtformteils aus hartem Metalldraht (5) mit abgerundetem Querschnitt, wobei der Metalldraht (5) zu dem Drahtformteil gebogen, gewunden oder gewickelt wird, wobei der Querschnitt (8) des harten Metalldrahts (5) zumindest in einem Bereich, der bei dem elastisch verformten Drahtformteil einer besonderen Beanspruchung unterliegt, vor dem Biegen, Winden oder Wickeln kaltverformt wird, wobei der abgerundete Querschnitt (8) des harten Metalldrahts (5) in dem Bereich, der bei dem elastisch verformten Drahtformteil einer besonderen Beanspruchung unterliegt, angeprägt wird, um lokale Eigenspannungen in diesen Bereich einzuführen, und wobei weder der Metalldraht (5) noch das Drahtformteil nach der Kaltverformung einer Temperatur von mehr als 250 °C ausgesetzt wird, **dadurch gekennzeichnet, daß** der abgerundete Querschnitt (8) des harten Metalldrahts (5) in dem Bereich, der bei dem elastisch verformten Drahtformteil einer besonderen Beanspruchung unterliegt, bei der Kaltverformung abgeflacht wird.

2. Verfahren nach Anspruch 1, **dadurch gekennzeichnet, daß** der abgerundete Querschnitt (8) des harten Metalldrahts (5) so angeprägt wird, daß die Anprägung (10) senkrecht zu einer Ebene verläuft, in der der Querschnitt (8) des Metalldrahts (5) bei dem elastisch verformten Drahtformteil einer besonderen Beanspruchung unterliegt.

3. Verfahren nach einem der Ansprüche 1 und 2, **dadurch gekennzeichnet, daß** der abgerundete Querschnitt (8) des harten Metalldrahts (5) so angeprägt wird, daß die Anprägung (10) am Innenradius (9) einer spiralförmigen Druckfeder (2) oder Zugfeder (21) angeordnet ist.

4. Verfahren nach einem der Ansprüche 1 und 2, **dadurch gekennzeichnet, daß** der abgerundete Querschnitt (8) des harten Metalldrahts (5) so angeprägt wird, daß die Anprägung (10) am Außenradius (24) einer spiralförmigen Torsionsfeder (25) angeordnet ist.

5. Verfahren nach Anspruch 3 oder 4, **dadurch gekennzeichnet, daß** der Metalldraht (5) beim Kaltverformen vor dem Biegen, Winden oder Wickeln mit zusätzlichen Abflachungen (11) versehen wird, über die benachbarte Windungen der spiralförmigen Feder (1) aneinander anliegen.

6. Verfahren nach Anspruch 4, **dadurch gekennzeichnet, daß** beim Winden der spiralförmigen Torsionsfeder (25) die Federenden (4) mit kleinerem Innendurchmesser (30) gewunden werden als der dazwischen liegende Hauptbereich der Torsionsfeder (25).

7. Verfahren nach Anspruch 6, **dadurch gekennzeichnet, daß** bei spiralförmigen Torsionsfedern (25) für unterschiedliche Beanspruchungen die Federenden (4) mit gleichem Innendurchmesser (30) gewunden werden.

8. Verfahren nach Anspruch 6 oder 7, **dadurch gekennzeichnet, daß** beim Winden der spiralförmigen Torsionsfeder (25) ein Stützkörper in den zwischen den Federenden (4) liegenden Hauptbereich eingebracht wird.

9. Verfahren nach einem der Ansprüche 1 bis 8, **dadurch gekennzeichnet, daß** der harte Metalldraht (5) ein hartgezogener Metalldraht (5) ist und daß der Querschnitt des Metalldrahts vor dem Anprägen rund ist.

## Claims

1. A process for the manufacture of an elastic formed wire part made of hard metal wire (5) having a rounded cross section, the metal wire (5) being bent, wound or coiled into the formed wire part, the cross section (8) of the hard metal wire (5) being cold worked prior to bending, winding or coiling at least in an area which is subjected to a particular stress in the elastically deformed formed wire part, the rounded cross section (8) of the hard metal wire (5) being pressed in the area which is subjected to a particular stress in the elastically deformed formed wire part to introduce internal stress into this area, and neither the metal wire (5) nor the formed wire part being subjected to a temperature of more than 250 °C after the step of cold working, **characterized in that** the rounded cross section (8) of the hard metal wire (5) is a flattened during the step of cold working in the area which is subjected to a particular stress in the elastically deformed formed wire part.

2. Process according to claim 1, **characterized in that** the rounded cross section (8) of the hard metal wire (5) is pressed in such a way that the pressed area (10) runs perpendicular to a plane in which the cross section (8) of the metal wire (5) is subjected to a particular stress in the elastically deformed formed wire part.

3. Process according to claim 1 or 2, **characterized in that** the rounded cross section (8) of the hard metal wire (5) is pressed in such a way that the pressed area (10) is arranged at the inner radius (9) of a spiral-shaped compression spring (2) or tension spring (21).

4. Process according to claim 1 or 2, **characterized in that** the rounded cross section (8) of the hard metal wire (5) is pressed in such a way, that the embossing (10) is arranged at the outer radius (24) of a spiral-shaped torsion spring (25).

5. Process according to claim 3 or 4, **characterized in that** the metal wire (5) is provided with further flattenings (11) during cold working prior to bending, winding or coiling, via which neighbouring windings of the spiral-shaped spring abut against each other.

6. Process according to claim 4, **characterized in that** in winding the spiral-shaped torsion spring (25) the spring ends (4) are wound with a smaller inner diameter (30) than the main portion of the torsion spring (25) situated between the spring ends.

7. Process according to claim 6, **characterized in that** with spiral-shaped torsion springs (25) for different loads the spring ends (4) are wound with a same inner diameter (30).

8. Process according to claim 6 or 7, **characterized in that** during winding the spiral-shaped torsion spring (25) a supporting body is introduced into the main portion situated between the spring ends (4).

9. Process according to any of the claims 1 to 8, **characterized in that** the hard metal wire (5) is a hard drawn metal wire (5) and that the cross section of the metal wire is round prior to pressing.

## Revendications

1. Procédé de fabrication d'une pièce façonnée élastique en fil métallique dur (5) de section transversale arrondie, le fil métallique (5) étant plié, tordu ou enroulé pour donner la pièce façonnée en fil, la section transversale (6) du fil métallique dur (5) étant déformée à froid avant pliage, torsion ou enroulement, au moins dans une zone qui est exposée à une contrainte particulière dans la pièce façonnée en fil déformée élastiquement, la section transversale (8) arrondie du fil métallique dur (5) étant estampée dans la zone qui est exposée à une contrainte particulière dans la pièce façonnée en fil déformée élastiquement, afin d'introduire des contraintes internes locales dans cette zone, et ni le fil métallique (5) ni la pièce façonnée en fil n'étant exposés à une température supérieure à 250° C après la déformation à froid, **caractérisé en ce que** la section transversale (8) arrondie du fil métallique dur (5) est aplatie lors de la déformation à froid, dans la zone qui est exposée à une contrainte particulière dans la pièce façonnée en fil déformée élastiquement.

2. Procédé selon la revendication 1, **caractérisé en ce que** la section transversale (8) arrondie du fil métallique dur (5) est estampée de manière que l'estampage (10) s'étende perpendiculairement à un plan dans lequel la section transversale (8) du fil métallique (5) est exposée à une contrainte particulière dans la pièce façonnée en fil déformée élastiquement.

3. Procédé selon l'une des revendications 1 et 2, **caractérisé en ce que** la section transversale (8) arrondie du fil métallique dur (5) est estampée de manière que l'estampage (10) soit disposé sur le rayon intérieur (9) d'un ressort de pression (2) ou ressort de traction (21) hélicoïdal.

4. Procédé selon l'une des revendications 1 et 2, **caractérisé en ce que** la section transversale (8) arrondie du fil métallique dur (5) est estampée de manière que l'estampage (10) soit disposé sur le rayon extérieur (24) d'un ressort de torsion (25) hélicoïdal.

5. Procédé selon la revendication 3 ou 4, **caractérisé en ce que** le fil métallique (5) est pourvu, lors de la déformation à froid, avant pliage, torsion ou enroulement, de parties aplaties (11) supplémentaires par lesquelles des spires adjacentes du ressort hélicoïdal (1) s'appliquent les unes contre les autres.

6. Procédé selon la revendication 4, **caractérisé en ce que** pendant la torsion du ressort de torsion (25) hélicoïdal, les extrémités (4) du ressort sont tordues suivant un diamètre intérieur (30) plus petit que la zone principale située entre celles-ci du ressort de torsion (25).

7. Procédé selon la revendication 6, **caractérisé en ce que** dans le cas de ressorts de torsion (25) hélicoïdaux pour contraintes différentes, les extrémités (4) des ressorts sont tordues suivant le même diamètre intérieur (30).

8. Procédé selon la revendication 6 ou 7, **caractérisé en ce que** pendant la torsion du ressort de torsion (25) hélicoïdal, un corps de soutien est introduit dans la zone principale située entre les extrémités (4) du ressort.

9. Procédé selon l'une des revendications 1 à 8, **caractérisé en ce que** le fil métallique dur (5) est un fil métallique (5) écroui et **en ce que** la section transversale du fil métallique est circulaire avec l'estampage.
